# EUROPEAN PATENT APPLICATION

(11) **EP 4 806 738 A1**
(43) Date of publication of application: **16.09.2026**
(21) Application number: 26163822.5
(22) Date of filing: 11.03.2026
(51) Int. Cl.: B60T 8/26, B60T 11/20, B60T 11/232

(54) **BRAKE SYSTEM FOR ALL-TERRAIN VEHICLE**

(30) Priority: 13.03.2025 CN 202510299912; 13.03.2025 CN 202510300730
(71) Applicant: Zhejiang CFMOTO Power Co., Ltd., Hangzhou, Zhejiang (CN)
(72) Inventor: Xufeng, DING, Hangzhou (CN); Hang, LI, Hangzhou (CN); Jingjie, CHENG, Hangzhou (CN); Guanglin, WANG, Hangzhou (CN)
(74) Representative: Sun, Yiming

(57) **Abstract**

The application discloses a brake system for all-terrain vehicle including a front-wheel brake assembly, a rear-wheel brake assembly, a brake pedal, a handbrake pump, and a hydraulic pump. The hydraulic pump includes a pump body, a piston mechanism, a connecting rod mechanism, and an elastic mechanism. The pump body defines a handbrake oil inlet, a first oil outlet, a second oil outlet, and a fluid supplement port. The handbrake oil inlet is in fluid communication with the handbrake pump, the first oil outlet is in fluid communication with a pressure port of the rear-wheel brake assembly through an oil delivery pipe, and the second oil outlet is in fluid communication with a pressure port of the front-wheel brake assembly through another oil delivery pipe. The connecting rod mechanism drives the piston to move under the function of the brake pedal, allowing oil to leave the chamber through the first and second oil outlets. The handbrake oil inlet receives pressure from the handbrake pump, enabling the oil to leave the chamber through the first oil outlet.

## Description

The present application claims the benefit of priority to Chinese Patent Application No. 202510299912.1, filed with the Chinese Patent Office on March 13, 2025, and Chinese Patent Application No. 202510300730.1, filed with the Chinese Patent Office on March 13, 2025. The entire contents of the above-referenced applications are incorporated herein by reference.

### FIELD

The present application relates to the fields of vehicle braking, and more particularly, to a brake system for an all-terrain vehicle.

### BACKGROUND

To support the high maneuverability of all-terrain vehicles (ATVs) and their usage requirements in complex environments, a brake system for all-terrain vehicle converts the force generated by a brake pedal or a handbrake pump into a hydraulic pressure. The hydraulic pressure is then transmitted to each wheel brake through a series of mechanisms, thereby slowing down or stopping the vehicle.

In the case of executing the braking mode of the vehicle through the brake pedal, only one hydraulic pump is needed to transmit the pressure generated by a brake fluid to a brake caliper corresponding to each of the four wheels, so that the brake caliper can clamp the brake disc. At present, an existing brake system for all-terrain vehicle on the market adopts a control manner to control the four wheels by the brake pedal and control the two front wheels by the handbrake pump, and such control manner is realized by cooperation of a hydraulic distribution valve and the hydraulic pump. Based on the above cooperative control manner, the functions of the brake pedal and the handbrake pump can be realized without any interference therebetween. For example, the hydraulic distribution valve is arranged between the hydraulic pump and the brake caliper corresponding to the front wheel, and the pressure generated by the handbrake pump is transmitted to the brake caliper corresponding to the front wheel through the hydraulic distribution valve. The pressure generated by the brake pedal is partially applied directly to the brake caliper corresponding to the rear wheel through the hydraulic pump, and is further partially applied to the brake caliper corresponding to the front wheel through the hydraulic distribution valve. However, for the brake system for all-terrain vehicle that achieves hydraulic distribution through the hydraulic pump and the hydraulic distribution valve, the structure is relatively complex, and many pipelines may be required that may lead to the risk of local leakage in the brake system for all-terrain vehicle, thereby seriously affecting the braking effect of the brake system.

### SUMMARY

In view of the above shortcomings of related arts, the purpose of the present application is to provide a brake system for all-terrain vehicle. The hydraulic pump of the system is integrated with the hydraulic distribution function, such that the quantity of components required for hydraulic transmission in the brake system for all-terrain vehicle may be reduced, thereby improving the airtightness of the system and allowing the braking effect to be stable.

To achieve the above purposes, the present application adopts following technical solution.

A brake system for all-terrain vehicle includes a front-wheel brake assembly, a rear-wheel brake assembly, a brake pedal, and a handbrake pump. The handbrake pump is configured to control the front-wheel brake assembly, and the brake pedal is configured to control the front-wheel brake assembly and the rear-wheel brake assembly. The brake system for all-terrain vehicle further includes a hydraulic pump. The hydraulic pump includes a pump body, a piston mechanism, a connecting rod mechanism, and an elastic mechanism. The pump body defines a chamber, the piston mechanism and the elastic mechanism are received in the chamber, the elastic mechanism is configured to drive the piston mechanism to return to an original position. One end of the connecting rod mechanism is connected to the piston mechanism, another end of the connecting rod mechanism is connected to the brake pedal. The pump body further defines a handbrake oil inlet, a first oil outlet, a second oil outlet, and a fluid supplement port each in fluid communication with the chamber. The handbrake oil inlet is in fluid communication with the handbrake pump through an oil delivery pipe, the first oil outlet is in fluid communication with a pressure port of the rear-wheel brake assembly through another oil delivery pipe, the second oil outlet is in fluid communication with a pressure port of the front-wheel brake assembly through yet another oil delivery pipe. The connecting rod mechanism is configured to drive the piston to move under a function of the brake pedal, thereby causing an oil to leave the chamber through the first oil outlet and the second oil outlet. The handbrake oil inlet is configured to receive pressure generated by the handbrake pump, thereby causing the oil to leave the chamber through the first oil outlet.

Furthermore, the hydraulic pump further includes a sealing mechanism. The sealing mechanism is installed in the chamber and fixed to the pump body. The sealing mechanism includes a chamber seal, a first seal, and a second seal. The chamber seal is configured to cooperate with the piston mechanism to divide the chamber into a first chamber and a second chamber. The first chamber is in fluid communication with the first oil outlet, the second chamber is in fluid communication with the second oil outlet. The piston mechanism includes a first piston and a second piston. The first piston is received in the first chamber, the second piston is received in the second chamber. The first seal is sleeved on the first piston, the second seal is sleeved on the second piston. The first piston and the second piston define a first compensation hole and a second compensation hole, respectively. The fluid supplement port is configured to communicate with the first chamber through the first compensation hole, and the handbrake oil inlet is configured to communicate with the second chamber through the second compensation hole.

Furthermore, the elastic mechanism includes a first elastic component and a second elastic component. The first elastic component is arranged between the first piston and the second piston, the second elastic component is arranged between the second piston and the pump body. A deformation direction of the first elastic component is the same as a deformation direction of the second elastic component, and an elastic coefficient of the first elastic component is greater than an elastic coefficient of the second elastic component.

Furthermore, the connecting rod mechanism is configured to drive the first piston to move in a preset direction under the function of the brake pedal. The first compensation hole is configured to be blocked by the first seal when the first piston moves, thereby allowing pressure to be built in the first chamber, and the oil in the first chamber to flow through the first oil outlet to the rear-wheel brake assembly. The first elastic component is configured to push the second piston to move in the preset direction when the first piston moves, and the second compensation hole is configured to be blocked by the second seal, thereby allowing pressure to be built in the second chamber, and the oil in the second chamber to flow through the second oil outlet to the front-wheel brake assembly.

Furthermore, the pressure built in the first chamber is a first pressure, and the pressure built in the second chamber is equal to the first pressure, when the connecting rod mechanism drives the first piston to move. The handbrake oil inlet is configured to further build pressure in the second chamber through a gap between the second seal and the second piston, when the handbrake pump generates pressure after a function of the connecting rod mechanism, thereby increasing the pressure in the second chamber to a second pressure. The second pressure is greater than the first pressure.

Furthermore, the handbrake oil inlet is configured to receive the oil from the handbrake pump when the handbrake pump generates pressure, thereby causing the oil to enter the second chamber through the second compensation hole to build pressure in the second chamber, and further causing the oil in the second chamber to flow through the second oil outlet to the front-wheel brake assembly.

Furthermore, when the handbrake pump generates pressure, the oil in the second chamber is configured to flow through the second oil outlet to the front-wheel brake assembly. The connecting rod mechanism is configured to drive the first piston to move in the preset direction under the function of the brake pedal. The first compensation hole is configured to be blocked by the first seal when the connecting rod mechanism drives the first piston to move in the preset direction after a function of the handbrake pump, thereby allowing pressure to be built in the first chamber, and the oil in the first chamber to flow through the first oil outlet to the rear-wheel brake assembly.

Furthermore, a sidewall of the second piston defines a limiting hole, a limiting component is provided in the limiting hole and fixed to the pump body, the limiting component is configured to limit a maximum moving distance of the piston mechanism. The limiting hole extends through the second piston along a radial direction of the second piston, the limiting hole is a waist-shaped hole, and a waist length of the waist-shaped hole is equal to the maximum moving distance of the piston mechanism.

Furthermore, the first piston defines a first fluid storage chamber in fluid communication with the first compensation hole, the first fluid storage chamber includes an opening in fluid communication with to the first chamber, a direction of the opening of the first fluid storage chamber faces the second piston, and at least a portion of the first elastic component is received in the first fluid storage chamber.

The second piston defines a second fluid storage chamber in fluid communication with the second compensation hole, the second fluid storage chamber includes an opening in fluid communication with the second chamber, a direction of the opening of the second fluid storage chamber is the same as the direction of the opening of the first fluid storage chamber, and at least a portion of the second elastic component is disposed in the second fluid storage chamber.

The brake system for the all-terrain vehicle of the present application is integrated with a hydraulic pump having hydraulic distribution function. When input from the brake pedal and/or the handbrake pump changes, the piston, the spring, and the connecting rod mechanism cooperate to control the changes of the output of different braking fluid outlets, thereby controlling the front-wheel brake assembly and the rear-wheel brake assembly through different control methods. Thus, the present application can reduce the quantity of components in the brake system for all-terrain vehicle required for hydraulic transmission, improve the airtightness of the brake system for all-terrain vehicle, and achieve more stable braking effect.

### BRIEF DESCRIPTION OF THE DRAWINGS

FIG. 1 is a schematic diagram of an all-terrain vehicle according to an embodiment of the present application.
FIG. 2 is a schematic diagram of a brake system of the all-terrain vehicle according to an embodiment of the present application.
FIG. 3 is a cross-sectional diagram of a portion of a hydraulic brake device according to an embodiment of the present application.
FIG. 4 is an exploded view of the hydraulic brake device from a first perspective according to an embodiment of the present application.
FIG. 5 is an exploded view of the hydraulic brake device from a second perspective according to an embodiment of the present application.
FIG. 6 is a sectional view of an elastic mechanism of the hydraulic brake device according to an embodiment of the present application, wherein the elastic mechanism in an initial state.
FIG. 7 is a sectional view of the elastic mechanism of the hydraulic brake device in the embodiment of the present application, wherein the elastic mechanism is in a compressed state.
FIG. 8 is a flowchart of the hydraulic brake device executing a first working condition according to an embodiment of the present application.
FIG. 9 is a flowchart of the hydraulic brake device executing a second working according to an embodiment of the present application.
FIG. 10 is a flowchart of the hydraulic brake device executing a third working condition according to an embodiment of the present application.
FIG. 11 is a flowchart of the hydraulic brake device executing a fourth working condition according to an embodiment of the present application.

### DETAILED DESCRIPTION

In order to enable a skilled in the art to better understand the present application, the following will provide a clear and complete description of the present disclosure, by way of embodiment and with reference to the attached figures.

It should be noted that the directional nouns such as up, down, left, right, front, and rear, as well as ordinal numerals such as "first" and "second" mentioned in the description, are based on the accompanying drawings and introduced for ease of description, but not intended to imply any limitation on the order of the related components. In addition, since some components provided in the embodiments may have a same function, the description uses a unified name for such components. The description introduces the pipeline connection device in detail, and specific embodiments are applied in the description for explanation. The embodiments are only used to help understand the method and core idea of the present application, but not intended to limit the present application in any form.

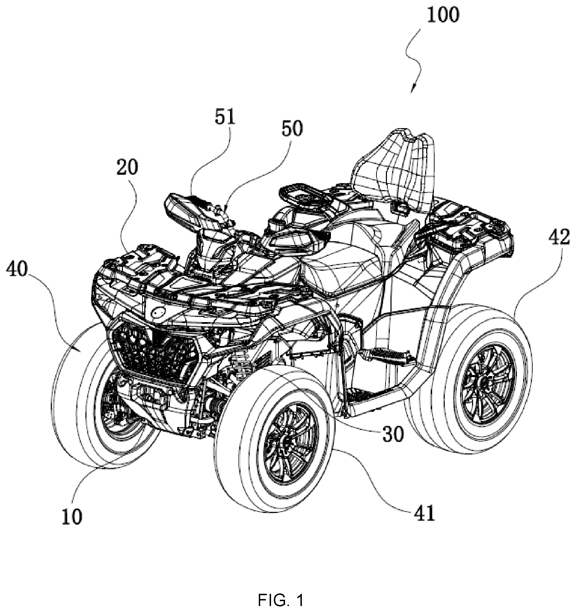

Referring to FIG. 1, the present application provides an all-terrain vehicle 100, including a frame 10, a body cover 20, a suspension system 30, a wheel system 40, and a steering system 50. The body cover 20 at least partially covers the frame 10. The body cover 20 includes, but is not limited to an engine compartment cover, a trunk lid, a car door, a fender, a body side panel, a roof canopy, etc. The suspension system 30 is connected between the frame 10 and the wheel system 40. The suspension system 30 is used to transmit forces and torques between the frame 10 and the wheel system 40, and to reduce the vibration caused by uneven road surfaces during a traveling process of the all-terrain vehicle 100. At least a portion of the wheel system 40 is located below the frame 10 to support the all-terrain vehicle 100. The wheel system 40 includes front wheels 41 and rear wheels 42. The steering system 50 is connected to the front wheels 41. The steering system 50 includes a steering handle 51.

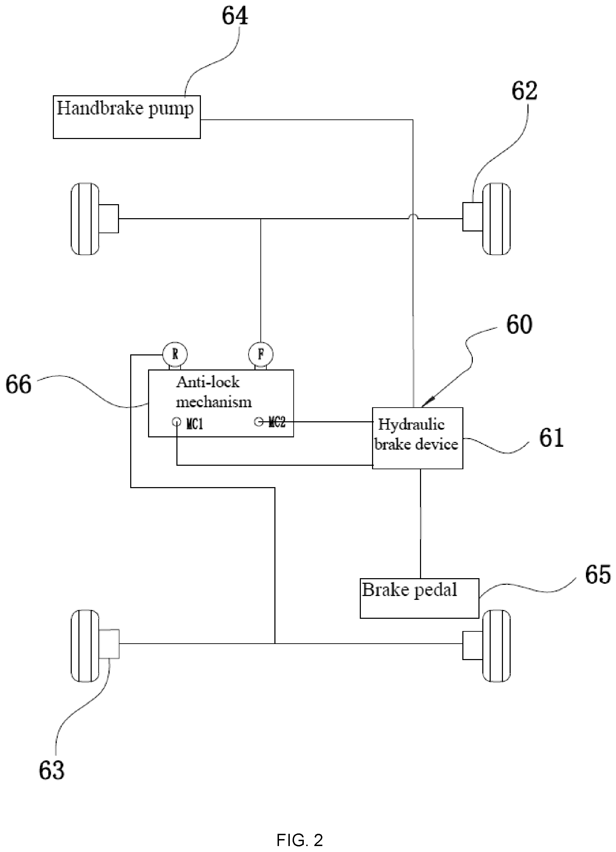

Referring to FIG. 2, furthermore, the all-terrain vehicle 100 includes an brake system for all-terrain vehicle 60. The brake system for all-terrain vehicle 60 serves to slow down or stop the vehicle.

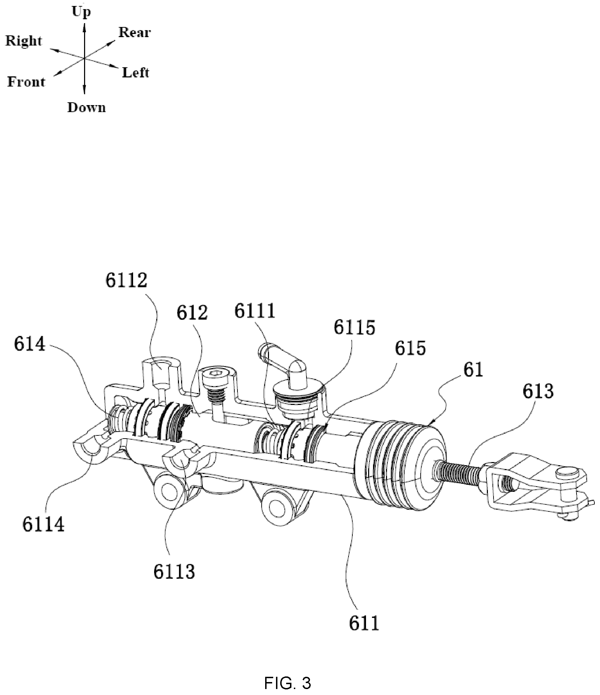

As shown in FIGS. 2 and 3, as an embodiment, the brake system for all-terrain vehicle 60 includes a hydraulic brake device 61, a front-wheel brake assembly 62, a rear-wheel brake assembly 63, a handbrake pump 64, and a brake pedal 65. The front-wheel brake assembly 62 is mounted on the front wheels 41. The rear-wheel brake assembly 63 is mounted on the rear wheels 42. The handbrake pump 64 is used to control the front-wheel brake assembly 62. The brake pedal 65 is used to simultaneously control the front-wheel brake assembly 62 and the rear-wheel brake assembly 63. Optionally, the handbrake pump 64 may be mounted on the steering handle 51. The steering handle 51 is equipped with a handbrake (not shown). The handbrake pump 64 can apply pressure onto the front-wheel brake assembly 62 under the function of the handbrake.

As shown in FIG. 3, specifically, the hydraulic brake device 61 is a hydraulic pump. The hydraulic pump includes a pump body 611, a piston mechanism 612, a connecting rod mechanism 613, and an elastic mechanism 614. The pump body 611 defines a chamber 6111. The chamber 6111 provides a space for storing the oil, and the oil is allowed to flow inside the chamber 6111. The piston mechanism 612 is located in the chamber 6111 and can move within the chamber 6111. The elastic mechanism 614 is used to resist against the piston mechanism 612. After the piston mechanism 612 moves, the piston mechanism 612 can return to its original position under the function of the elastic mechanism 614 and adjust the internal pressure of the pump body 611. One end of the connecting rod mechanism 613 is connected to the piston mechanism 612, and another end of the connecting rod mechanism 613 is connected to the brake pedal 65. The connecting rod mechanism 613 can drive the piston mechanism 612 to move under the function of the brake pedal 65.

Specifically, the pump body 611 further defines a handbrake oil inlet 6112, a first oil outlet 6113, a second oil outlet 6114, and a fluid supplement port 6115 each in fluid communication with the chamber 6111. The handbrake oil inlet 6112 is in fluid communication with the handbrake pump 64 through an oil delivery pipe. The first oil outlet 6113 is in fluid communication with a pressure port of the rear-wheel brake assembly 63 through another oil delivery pipe. The second oil outlet 6114 is in fluid communication with a pressure port of the front-wheel brake assembly 62 through yet another oil delivery pipe. The oil delivery pipes are pipelines for transporting the oil. The connecting rod mechanism 613 drives the piston mechanism 612 to move under the function of the brake pedal 65, thereby causing the oil to leave the chamber 6111 through the first oil outlet 6113 and the second oil outlet 6114. The handbrake oil inlet 6112 is used to receive the pressure generated by the handbrake pump 64, thereby causing the oil to leave the chamber 6111 through the second oil outlet 6114.

For example, the brake system for all-terrain vehicle 60 further includes an oil tank (not shown) for storing the oil. The fluid supplement port 6115 is connected to the oil tank. The oil tank can supplement the oil into the chamber 6111 through the fluid supplement port 6115. Alternatively, when the pressure in the chamber 6111 increases, the hydraulic brake device 61 can force at least a portion of the oil back into the oil tank through the fluid supplement port 6115. Thus, the pressure in the hydraulic brake device 61 can be balanced during operation through the oil tank connected to the fluid supplement port 6115.

As shown in FIG. 2, optionally, the brake system for all-terrain vehicle 60 further includes an anti-lock mechanism 66. The anti-lock mechanism 66 is set between the hydraulic brake device 61 and the front-wheel brake assembly 62, and also between the hydraulic brake device 61 and the rear-wheel brake assembly 63. When the vehicle brakes suddenly or brakes on a road surface with low adhesion, the anti-lock mechanism 66 can prevent the tires from being locked, such that the vehicle still has a certain steering ability, thereby improving driving safety. The anti-lock mechanism 66 has two hydraulic circuit interfaces. The two hydraulic circuit interfaces are connected to the first oil outlet 6113 and the second oil outlet 6114, respectively, such that the anti-lock mechanism 66 can directly control the hydraulic pressure distribution to the front-wheel brake assembly 62 and the rear-wheel brake assembly 63.

In the embodiment of the present application, the hydraulic brake device 61 does not receive any external force when there is no braking operation. The piston mechanism 612 is located at the initial position of the chamber 6111. The elastic mechanism 614 is in a natural state. When the driver steps on the brake pedal 65, the brake pedal 65 transmits force to the hydraulic brake device 61 through the connecting rod mechanism 613. The connecting rod mechanism 613 drives the piston mechanism 612 to move inside the chamber 6111 under the pressure of the brake pedal 65, thereby causing the oil to leave the chamber 6111 through the first oil outlet 6113 and the second oil outlet 6114. The oil flows through the pressure port of the rear-wheel brake assembly 63 through the first oil outlet 6113, which provides the braking pressure required for the rear-wheel brake assembly 63. At the same time, the oil flows through the pressure port of the front-wheel brake assembly 62 through the second oil outlet 6114, which provides hydraulic support for the front-wheel brake assembly 62. During the handbrake operation, the handbrake pump 64 transmits pressure to the chamber 6111 through the handbrake oil inlet 6112, and the oil flows through the front-wheel brake assembly 62 through the first oil outlet 6113.

When the input from the brake pedal 65 and/or the handbrake changes, the piston mechanism 612, the elastic mechanism 614, and the connecting rod mechanism 613 cooperatively control the flow of hydraulic oil and the pressure distribution, thereby only changing the output of different oil outlets of hydraulic brake device 61. Thus, the front-wheel brake assembly 62 and/or the rear-wheel brake assembly 63 are controlled through different control methods. The hydraulic pump of the brake system for all-terrain vehicle 60 is integrated with hydraulic distribution function, which reduces the quantity of components required for hydraulic transmission, improves the airtightness of the system, and allows the braking effect to be stable.

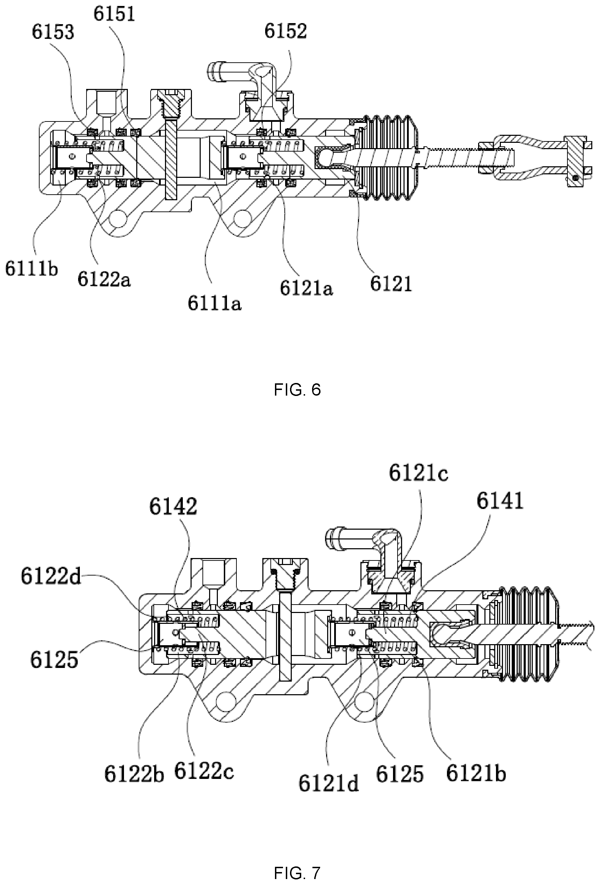

As shown in FIGS. 3 to 5, as an embodiment, the hydraulic brake device 61 further includes a plurality of seals 615. The plurality of seals 615 is installed in the chamber 6111 and fixed to the pump body 611. The plurality of seals 615 includes a chamber seal 6151, a first seal 6152, and a second seal 6153. The chamber seal 6151 cooperates with the piston mechanism 612 to divide the chamber 6111 into a first chamber 6111a and a second chamber 6111b (see FIG. 6). The first chamber 6111a is in fluid communication with the first oil outlet 6113, and the second chamber 6111b is in fluid communication with the second oil outlet 6114. The piston mechanism 612 includes a first piston 6121 and a second piston 6122. The first piston 6121 is received in the first chamber 6111a, and the second piston 6122 is received in the second chamber 6111b. The first seal 6152 and the second seal 6153 are sleeved on the first piston 6121 and the second piston 6122, respectively. The first piston 6121 and the second piston 6122 are respectively provided with a first compensation hole 6121a and a second compensation hole 6122a, respectively. The fluid supplement port 6115 can communicate with the first chamber 6111a through the first compensation hole 6121a. The handbrake oil inlet 6112 can communicate with the second chamber 6111b through the second compensation hole 6122a.

In different braking modes, the flow path of the oil is controlled through the cooperation between the first seal 6152 and the first compensation hole 6121a and/or the cooperation between the second seal 6153 and the second compensation hole 6122a. Then, whether the oil flows into the first chamber 6111a through the first compensation hole 6121a and/or into the second chamber 6111b through the second compensation hole 6122a can be determined. Thus, the pressure in the first chamber 6111a or the second chamber 6111b changes, thereby controlling the output of different oil outlets and achieving the hydraulic distribution function.

Through the above settings, the pressure can be built in the first chamber 6111a and the second chamber 6111b according to the external input pressure (the pressure building process of the hydraulic brake device 61 refers to a process of the hydraulic brake device 61 building the working pressure when starting from the initial state), such that the hydraulic brake device 61 is integrated with the hydraulic distribution function, thereby reducing the quantity of components in the brake system for all-terrain vehicle 60 required for hydraulic transmission, improving the airtightness of the brake system for all-terrain vehicle 60, and enabling the brake system for all-terrain vehicle 60 to achieve a precise hydraulic brake control.

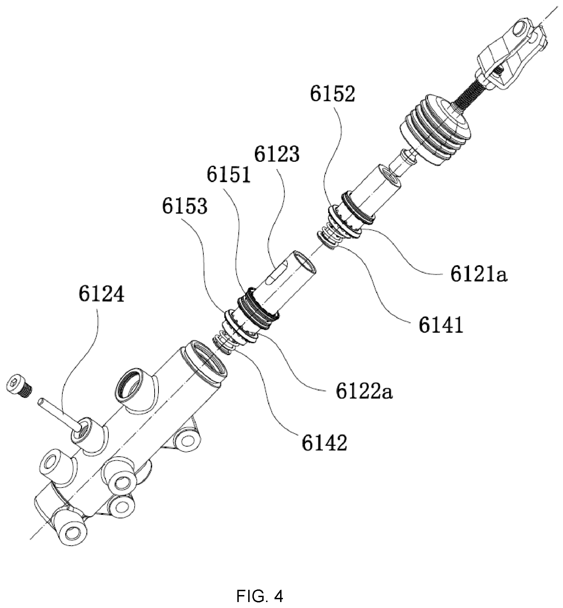

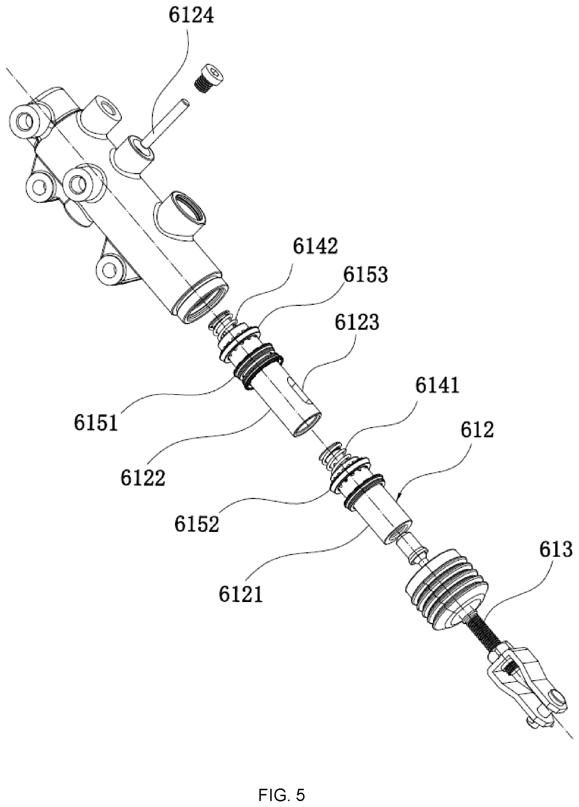

As shown in FIGS. 4 and 5, optionally, a limiting hole 6123 is provided on the sidewall of the first piston 6121 or the second piston 6122. A limiting component 6124 is provided in the limiting hole 6123 and fixed to the pump body 611. When the piston mechanism 612 is subjected to the force from the connecting rod mechanism 613, the limiting component 6124 in the limiting hole 6123 will limit a maximum moving range of the piston mechanism 612.

For example, the limiting component 6124 includes, but is not limited to a pin-typed limiting component, a slot-typed limiting component, an elastic limiting component, a fixing-block-typed limiting component, etc. For example, the limiting hole 6123 extends through the second piston 6122 along a radial direction of the second piston 6122. The limiting hole 6123 is designed as a waist-shaped hole. The limiting component 6124 is designed as a pin-type limiting component. Two ends of the pin-typed limiting component are fixed to the pump body 611, thereby serving to limit the position of the piston mechanism 612 such that the movement of the piston mechanism 612 will not exceed a predetermined moving range. Wherein, the predetermined moving range refers to a long-axis size of the waist-shaped hole, namely, a distance that the limiting component 6124 can move within the limiting hole 6123 during the movement of the piston mechanism 612.

As shown in FIGS. 6 and 7, as an embodiment, when the elastic mechanism 614 is in the initial state, the first chamber 6111a is in fluid communication with the fluid supplement port 6115 through the first compensation hole 6121a defined on the first piston 6121. The second chamber 6111b is in fluid communication with the handbrake oil inlet 6112 through the second compensation hole 6122a defined on the second piston 6122. Thus, the inflow/outflow of the oil can independently happen in the first chamber 6111a and the second chamber 6111b, respectively.

When the elastic mechanism 614 is in the compressed state, the first compensation hole 6121a and the second compensation hole 6122a can be blocked by the first seal 6152 and the second seal 6153, respectively, such that the pressure can be built in the first chamber 6111a and the second chamber 6111b.

Specifically, the first compensation hole 6121a is located at the sidewall of the first piston 6121, and the second compensation hole 6122a is located at the sidewall of the second piston 6122. The function of the first compensation hole 6121a is to achieve a pressure balance in the first chamber 6111a and in the fluid supplement port 6115. The function of the second compensation hole 6122a is to achieve a pressure balance in the second chamber 6111b and in the handbrake oil inlet 6112. When the first seal 6152 blocks the first compensation hole 6121a, the pressure begins to be built in the first chamber 6111a. When the second seal 6153 blocks the second compensation hole 6122a, the pressure begins to be built in the second chamber 6111b.

As shown in FIG. 7, as an embodiment, the first piston 6121 has a first fluid storage chamber 6121b in fluid communication with the first chamber 6111a. The second piston 6122 has a second fluid storage chamber 6122b in fluid communication with the second chamber 6111b. When the elastic mechanism 614 is in the initial state, the first fluid storage chamber 6121b is in fluid communication with the fluid supplement port 6115 through the first compensation hole 6121a defined on the first piston 6121, and the second fluid storage chamber 6122b is in fluid communication with the handbrake oil inlet 6112 through the second compensation hole 6122a defined on the second piston 6122. Thus, the inflow/outflow of the oil can independently happen in the first chamber 6111a and the second chamber 6111b, respectively.

Wherein, the first fluid storage chamber 6121b has a first opening 6121d in fluid communication with the first chamber 6111a. The direction of the opening of the first fluid storage chamber 6121b faces the second piston 6122. At least a portion of a first elastic component 6141 is received in the first fluid storage chamber 6121b. The second fluid storage chamber 6122b has a second opening 6122d in fluid communication with the second chamber 6111b. The direction of the opening of the second fluid storage chamber 6122b is the same as the direction of the opening of the first fluid storage chamber 6121b. At least a portion of a second elastic component 6142 is received in the second fluid storage chamber 6122b. When the oil flows to the first chamber 6111a from the first fluid storage chamber 6121b and flows to the second chamber 6111b from the second fluid storage chamber 6122b, under the change in pressure, the oil will enter the first chamber 6111a and the second chamber 6111b through the first opening 6121d and the second opening 6122d, respectively.

As shown in FIGS. 4, 5, and 7, as an embodiment, the elastic mechanism 614 further includes the first elastic component 6141 and the second elastic component 6142. The two ends of the first elastic component 6141 are connected to the first piston 6121 and the second piston 6122, respectively, and at least a portion of the first elastic component 6141 is received in the first fluid storage chamber 6121b. The two ends of the second elastic component 6142 are connected to the second piston 6122 and the inner wall of the pump body 611, respectively, and at least a portion of the second elastic component 6142 is received in the second fluid storage chamber 6122b. When the connecting rod mechanism 613 is subjected to an external force, the connecting rod mechanism 613 will transmit the force to the piston mechanism 612. During this process, the elastic mechanism 614 converts the pressure into an elastic potential energy. When the force from the connecting rod mechanism 613 is removed, the first elastic component 6141 and the second elastic component 6142 drive the piston mechanism 612 back to its original position.

Furthermore, the elastic coefficient of the first elastic component 6141 is greater than that of the second elastic component 6142. When the piston mechanism 612 is subjected to the force from the connecting rod mechanism 613, the first piston 6121 and the second piston 6122 can move synchronously. It should be noted that if the elastic coefficient of the first elastic component 6141 is smaller than that of the second elastic component 6142, when the piston mechanism 612 is subjected to the force from the connecting rod mechanism 613, there may be a situation where the first piston 6121 moves but the second piston 6122 is stationary, which results in an insufficient braking force for the front-wheel brake assembly 62 and affects the braking effect of the all-terrain vehicle 100. Through the above setting of the embodiment, the connecting rod mechanism 613 can drive the first piston 6121 and the second piston 6122 to move synchronously under the function of the brake pedal 65. Thus, the pressure can be built synchronously in the first chamber 6111a and the second chamber 6111b, thereby allowing the front-wheel brake assembly 62 and the rear-wheel brake assembly 63 to operate synchronously.

As shown in FIG. 7, as an embodiment, the piston mechanism 612 further includes a guiding component 6125. The guiding component 6125 is arranged between the first piston 6121 and the second piston 6122. The first piston 6121 has a first positioning portion 6121c extending along an axial direction of the first piston 6121. The first positioning portion 6121c is located in the first fluid storage chamber 6121b and extends towards the first opening 6121d, so that at least a portion of the first positioning portion 6121c extends through the guiding component 6125 and is in clearance fit with the guiding component 6125. Since the guiding component 6125 and the first positioning portion 6121c are in clearance fit with each other, when the first piston 6121 moves, the first positioning portion 6121c can move within the gap range of the guiding component 6125, thereby ensuring that the first piston 6121 moves only along its axial direction, avoiding any deviation of the first piston 6121, and reducing the wear of the first piston 6121.

Optionally, the guiding component 6125 may also be arranged between the second piston 6122 and the inner wall of the pump body 611. The second piston 6122 has a second positioning portion 6122c extending along the axial direction of the second piston 6122. The second positioning portion 6122c is located in the second fluid storage chamber 6122b and extends towards the second opening 6122d. Thus, at least a portion of the second positioning portion 6122c extends through the guiding component 6125 and is in clearance fit with the guiding component 6125, thereby ensuring that the second piston 6122 moves along its axial direction and reducing the wear of the second piston 6122.

As an embodiment, based on different external inputs, the hydraulic brake device 61 can respond to the force generated by the handbrake and the brake pedal 65 and perform following four working conditions.

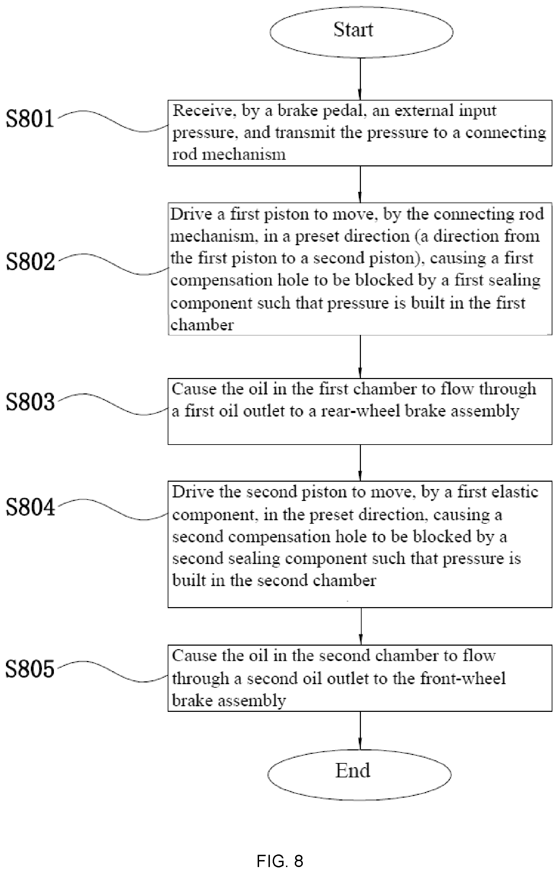

As shown in FIG. 8, the first working condition is that only the force generated by the brake pedal 65 is applied onto the hydraulic brake device 61, and the hydraulic brake device 61 performs steps as follows.

Step S801, the brake pedal 65 receives an external input pressure and transmits the pressure to the connecting rod mechanism 613.

Step S802, the connecting rod mechanism 613 drives the first piston 6121 to move in a preset direction (the preset direction refers to a direction from the first piston 6121 to the second piston 6122), thereby causing the first compensation hole 6121a to be blocked by the first seal 6152 such that pressure is built in the first chamber 6111a.

Step S803, the oil in the first chamber 6111a flows through the first oil outlet 6113 to the rear-wheel brake assembly 63.

Step S804, the first elastic component 6141 acts on the second piston 6122 such that the second piston 6122 moves in the preset direction, thereby causing the second compensation hole 6122a to be blocked by the second seal 6153 such that pressure is built in the second chamber 6111b.

Step S805, the oil in the second chamber 6111b flows through the second oil outlet 6114 to the front-wheel brake assembly 62.

It should be noted that since the external input is only from the brake pedal 65, the pressure building processes in the first chamber 6111a and the second chamber 6111b are performed simultaneously, and the pressure in the second chamber 6111b is equal to that in the first chamber 6111a, thereby achieving synchronous braking of the front wheels 41 and the rear wheels 42 through the brake pedal 65.

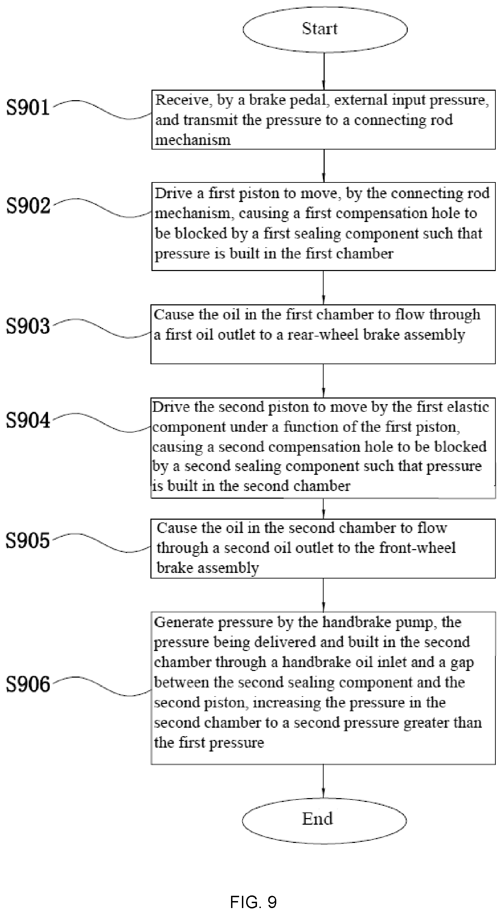

As shown in FIG. 9, the second working condition is that the pressure generated by the brake pedal 65 first acts on the hydraulic brake device 61, and then the pressure generated by the handbrake pump 64 acts on the hydraulic brake device 61. The hydraulic brake device 61 performs steps as follows.

Step S901, the brake pedal 65 receives external input pressure and transmits the pressure to the connecting rod mechanism 613.

Step S902, the connecting rod mechanism 613 drives the first piston 6121 to move, thereby causing the first compensation hole 6121a to be blocked by the first seal 6152 such that the pressure is built in the first chamber 6111a.

Wherein, when the pressure is built in the first chamber 6111a, the pressure in the first chamber 6111a is a first pressure.

Step S903, the oil in the first chamber 6111a flows through the first oil outlet 6113 to the rear-wheel brake assembly 63.

Step S904, the first elastic component 6141 drives the second piston 6122 to move under the function of the first piston 6121, thereby causing the second compensation hole 6122a to be blocked by the second seal 6153 such that the pressure is built in the second chamber 6111b.

When the pressure is built in the second chamber 6111b, the pressure in the second chamber 6111b is equal to the first pressure.

Step S905, the oil in the second chamber 6111b flows through the second oil outlet 6114 to the front-wheel brake assembly 62.

Step S906, the handbrake pump 64 generates pressure. The pressure is delivered and built in the second chamber 6111b through the handbrake oil inlet 6112 and the gap between the second seal 6153 and the second piston 6122, thereby increasing the pressure in the second chamber 6111b to a second pressure. The second pressure is greater than the first pressure.

It should be noted that if the pressure in the second chamber 6111b increases to the second pressure, since the pressure in the second chamber 6111b is different from the pressure in the first chamber 6111a, the second piston 6122 will move towards the first piston 6121 under the pressure, thereby compressing the first elastic component 6141 until the pressure in the second chamber 6111b is equal to that in the first chamber 6111a. Thus, the hydraulic brake device 61 achieves a state of pressure balance.

In the embodiment of the present application, the second seal 6153 has a unidirectional pressure building function, such that the oil in the handbrake pump 64 can enter the second chamber 6111b through the gap between the second piston 6122 and the second seal 6153, thereby causing the pressure in the second chamber 6111b to increase to the second pressure.

For example, the second seal 6153 is set as either a C-typed leather bowl or an E-typed leather bowl.

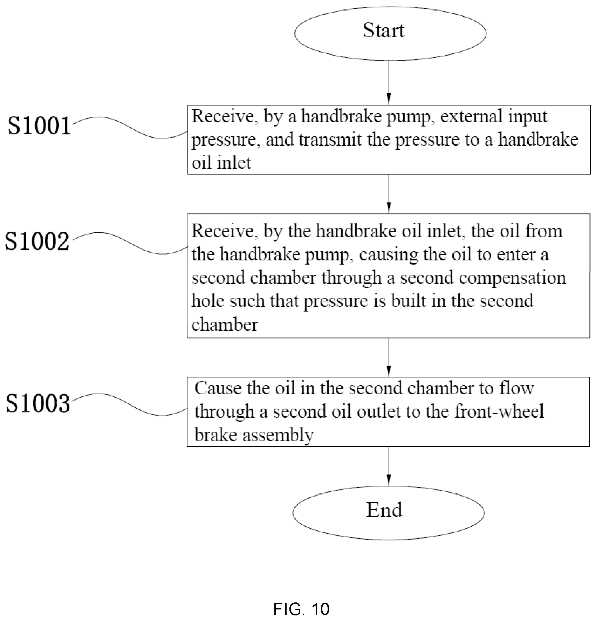

As shown in FIG. 10, the third working condition is that only the pressure generated by the handbrake pump 64 acts on the hydraulic brake device 61, and the hydraulic brake device 61 performs steps as follows.

Step S1001, the handbrake pump 64 receives external input pressure and transmits the pressure to the handbrake oil inlet 6112.

Step S1002, the handbrake oil inlet 6112 receives the oil from the handbrake pump 64, and the oil then enters the second chamber 6111b through the second compensation hole 6122a, such that the pressure is built in the second chamber 6111b.

Step S1003, the oil in the second chamber 6111b flows through the second oil outlet 6114 to the front-wheel brake assembly 62.

It should be noted that since the connecting rod mechanism 613 does not apply any pressure onto the piston mechanism 612, the piston mechanism 612 is located at the initial position of the chamber 6111. At this time, the second compensation hole 6122a is not blocked by the second sealing mechanism 615, thereby allowing the oil to flow from the handbrake oil inlet 6112 through the second compensation hole 6122a and then enter the second chamber 6111b, such that the pressure is built in the second chamber 6111b. Thus, the control of braking of the front wheel 41 can be realized independently by the handbrake.

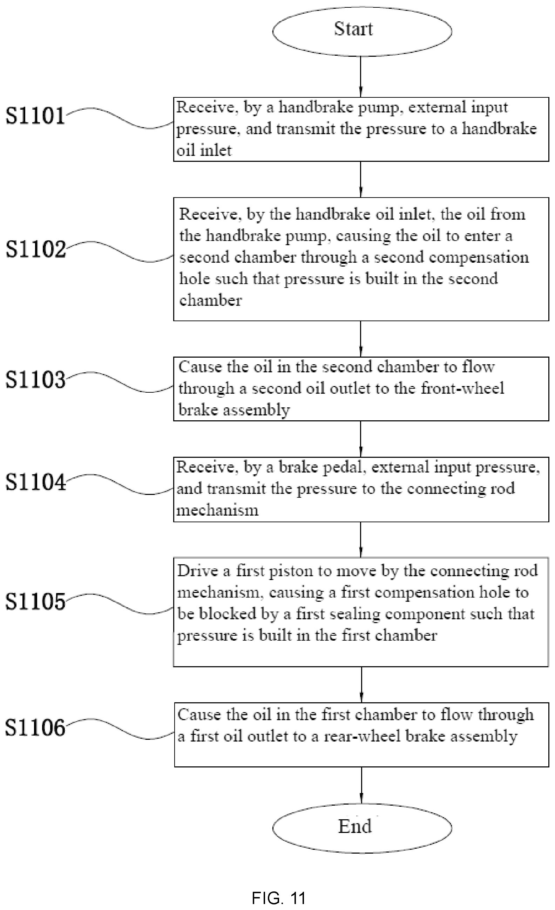

As shown in FIG. 11, the fourth working condition is that the pressure generated by the handbrake pump 64 first acts on the hydraulic brake device 61, and then the pressure generated by the brake pedal 65 acts on the hydraulic brake device 61. The hydraulic brake device 61 performs steps as follows.

Step S1101, the handbrake pump 64 receives external input pressure and transmits the pressure to the handbrake oil inlet 6112.

Step S1102, the handbrake oil inlet 6112 receives the oil from the handbrake pump 64, and the oil then enters the second chamber 6111b through the second compensation hole 6122a, such that the pressure is built in the second chamber 6111b.

Step 1103, the oil in the second chamber 6111b flows through the second oil outlet 6114 to the front-wheel brake assembly 62.

Step S1104, the brake pedal 65 receives external input pressure and transmits the pressure to the connecting rod mechanism 613.

Step S1105, the connecting rod mechanism 613 drives the first piston 6121 to move, thereby causing the first compensation hole 6121a to be blocked by the first seal 6152 such that the pressure is built in the first chamber 6111a.

Step S1006, the oil in the first chamber 6111a flows through the first oil outlet 6113 through the rear-wheel brake assembly 63.

Wherein, since the connecting rod mechanism 613 drives the first piston 6121 to move, the first elastic component 6141 connected to the first piston 6121 will also drive the second piston 6122 to move, thereby compressing the space of the second chamber 6111b. If the pressure built in the second chamber 6111b under the function of the handbrake pump 64 is P1, and the pressure built in the first chamber 6111a under the function of the connecting rod mechanism 613 is P2, then the pressure in the second chamber 6111b after the space of the second chamber 6111b is compressed is P3 (P3=P1+P2). Since the pressure P3 in the second chamber 6111b is greater than the pressure P2 in the first chamber 6111a, the second piston 6122 moves closer to the first piston 6121 to compress the first elastic component 6141 until the pressure in the second chamber 6111b is equal to that in the first chamber 6111a. Thus, the hydraulic brake device 61 achieves a state of pressure balance.

In summary, in the present embodiments of the present application, the hydraulic brake device 61 is integrated with the hydraulic distribution function, which reduces the quantity of components in the brake system for all-terrain vehicle 60 required for hydraulic transmission, improves the airtightness of the system, and allows the braking effect to be stable.

It should be understood that for those skilled in the art, improvements or transformations may be made based on the above description, and all the improvements and transformations should be within the scope of claims attached to the present application.

## Claims

1. A hydraulic brake device applied to a hydraulic brake system of an all-terrain vehicle, the hydraulic brake system comprising a front-wheel brake assembly, a rear-wheel brake assembly, and a handbrake pump, the hydraulic brake device comprising:
a pump body defining a chamber;
a piston mechanism disposed in and movably received in the chamber;
a sealing mechanism installed in the chamber and fixed to the pump body;
a connecting rod mechanism configured to drive the piston mechanism to move; and
an elastic mechanism configured to return the piston mechanism to an original position;
wherein the pump body defines a handbrake oil inlet, a first oil outlet, a second oil outlet, and a fluid supplement port each in fluid communication with the chamber, the handbrake oil inlet is configured to be in fluid communication with the handbrake pump through an oil delivery pipe, the first oil outlet is configured to be in fluid communication with the rear-wheel brake assembly through another oil delivery pipe, the second oil outlet is configured to be in fluid communication with the front-wheel brake assembly through yet another oil delivery pipe; the sealing mechanism comprises a chamber seal, a first seal, and a second seal, the chamber seal cooperates with the piston mechanism to divide the chamber into a first chamber in fluid communication with the first oil outlet and a second chamber in fluid communication with the second oil outlet; the piston mechanism comprises a first piston received in the first chamber and a second piston received in the second chamber, the first seal is sleeved on the first piston, the second seal is sleeved on the second piston; the first piston defines a first compensation hole, the second piston defines a second compensation hole, the replenishment port is configured to be
in fluid communication with the first chamber through the first compensation hole, and the handbrake oil inlet is configured to be in fluid communication with the second chamber through the second compensation hole.

2. The hydraulic brake device according to claim 1, wherein the fluid supplement port is in fluid communication with the first chamber through the first compensation hole, and the handbrake oil inlet is in fluid communication with the second chamber through the second compensation hole when the elastic mechanism is in an initial state; the first compensation hole and the second compensation hole are blocked by the first seal and the second seal, respectively when the elastic mechanism is in a compressed state, thereby allowing pressure to be built in each of the first chamber and the second chamber; the elastic mechanism comprises a first elastic component and a second elastic component, the first elastic component is arranged between the first piston and the second piston, the second elastic component is arranged between the second piston and the pump body, a deformation direction of the first elastic component is the same as a deformation direction of the second elastic component, and an elastic coefficient of the first elastic component is greater than an elastic coefficient of the second elastic component.

3. The hydraulic brake device according to claim 2, wherein the hydraulic brake system comprises a brake pedal connected to the connecting rod mechanism; the connecting rod mechanism is configured to drive the first piston to move in a preset direction under a function of the brake pedal, the first compensation hole is configured to be blocked by the first seal when the first piston moves, thereby allowing pressure to be built in the first chamber, and the oil in the first chamber to flow through the first oil outlet to the rear-wheel brake assembly; the first elastic component is configured to push the second piston to move in the preset direction when the first piston moves, and the second compensation hole is configured to be blocked by the second seal, thereby allowing pressure to be built in the second chamber, and the oil in the second chamber to flow through the second oil outlet to the front-wheel brake assembly; the pressure built in the first chamber is a first pressure, and the pressure built in the second chamber is equal to the first pressure when the connecting rod mechanism drives the first piston to move; the handbrake oil inlet is configured to further build pressure in the second chamber through a gap between the second seal and the second piston when the handbrake pump generates pressure after a function of the connecting rod mechanism, thereby increasing the pressure in the second chamber to a second pressure, and the second pressure is greater than the first pressure.

4. The hydraulic brake device according to claim 2, wherein the handbrake oil inlet is configured to receive the oil from the handbrake pump when the handbrake pump generates pressure, thereby causing the oil to enter the second chamber through the second compensation hole to build pressure in the second chamber, and further causing the oil in the second chamber to flow through the second oil outlet to the front-wheel brake assembly; when the handbrake pump generates pressure, the oil in the second chamber is configured to flow through the second oil outlet to the front-wheel brake assembly; the hydraulic brake comprises a brake pedal connected to the connecting rod mechanism; the connecting rod mechanism is configured to drive the first piston to move in the preset direction under a function of the brake pedal; the first compensation hole is configured to be blocked by the first seal when the connecting rod mechanism drives the first piston to move in the preset direction after a function of the handbrake pump, thereby allowing pressure to be built in the first chamber, and the oil in the first chamber to flow through the first oil outlet to the rear-wheel brake assembly.

5. The hydraulic brake device according to claim 2, wherein the first piston defines a first fluid storage chamber in fluid communication with the first compensation hole, the first fluid storage chamber comprises an opening in fluid communication with to the first chamber, a direction of the opening of the first fluid storage chamber faces the second piston, and at least a portion of the first elastic component is received in the first fluid storage chamber; the second piston defines a second fluid storage chamber in fluid communication with the second compensation hole, the second fluid storage chamber comprises an opening in fluid communication with the second chamber, a direction of the opening of the second fluid storage chamber is the same as the direction of the opening of the first fluid storage chamber, and at least a portion of the second elastic component is disposed in the second fluid storage chamber; the piston mechanism comprises a guiding component; the guiding component is located between the first piston and the second piston, the first piston comprises a first positioning portion extending along an axial direction of the first piston, the first positioning portion is located in the first fluid storage chamber, and at least a portion of the first positioning portion is inserted into the guiding component and in clearance fit with the guiding component; and/or the guiding component is located between the second piston and the pump body, the second piston comprises a second positioning portion extending along an axial direction of the second piston, the second positioning portion is located in the second fluid storage chamber, at least a portion of the second positioning portion is inserted into the guiding component and in clearance fit with the guiding component.

6. The hydraulic brake device according to claim 1, wherein a sidewall of the first piston or the second piston defines a limiting hole, a limiting component is provided in the limiting hole and fixed to the pump body, and the limiting component is configured to limit a maximum moving distance of the piston mechanism.

7. The hydraulic brake device according to claim 6, wherein the limiting hole extends through the second piston along a radial direction of the second piston, the limiting hole is a waist-shaped hole having a waist length equal to the maximum moving distance of the piston mechanism.

8. An all-terrain vehicle comprising:
a frame;
a suspension system connected to the frame;
a traveling system connected to the suspension system, and comprising two front wheels and two rear wheels;
a steering system connected to the two front wheels and comprising a steering handle; and
a hydraulic brake system comprising a front-wheel brake assembly, a rear-wheel brake assembly, and a handbrake pump, the front-wheel brake assembly installed to the two front wheels, the rear-wheel brake assembly installed to the two rear wheels, and the handbrake pump installed to the steering handle;
the hydraulic brake system further comprising a hydraulic brake device according to any one of claims 1 to 8.

9. A brake system for all-terrain vehicle comprising:
a front-wheel brake assembly, a rear-wheel brake assembly, a brake pedal, and a handbrake pump, wherein the handbrake pump is configured to control the front-wheel brake assembly, and the brake pedal is configured to control the front-wheel brake assembly and the rear-wheel brake assembly;
wherein the brake system for all-terrain vehicle further comprising:
a hydraulic pump comprising a pump body, a piston mechanism, a connecting rod mechanism, and an elastic mechanism, wherein the pump body defines a chamber, the piston mechanism and the elastic mechanism are received in the chamber, the elastic mechanism is configured to drive the piston mechanism to return to an original position;
one end of the connecting rod mechanism is connected to the piston mechanism, another end of the connecting rod mechanism is connected to the brake pedal; the pump body further defines a handbrake oil inlet, a first oil outlet, a second oil outlet, and a fluid supplement port each in fluid communication with the chamber, the handbrake oil inlet is in fluid communication with the handbrake pump through an oil delivery pipe, the first oil outlet is in fluid communication with a pressure port of the rear-wheel brake assembly through another oil delivery pipe, the second oil outlet is in fluid communication with a pressure port of the front-wheel brake assembly through yet another oil delivery pipe; the connecting rod mechanism is configured to drive the piston to move under a function of the brake pedal, thereby causing an oil to leave the chamber through the first oil outlet and the second oil outlet; the handbrake oil inlet is configured to receive pressure generated by the handbrake pump, thereby causing the oil to leave the chamber through the first oil outlet.

10. The brake system for all-terrain vehicle according to claim 9, wherein the hydraulic pump further comprises a sealing mechanism, the sealing mechanism is installed in the chamber and fixed to the pump body, the sealing mechanism comprises a chamber seal, a first seal, and a second seal, the chamber seal is configured to cooperate with the piston mechanism to divide the chamber into a first chamber and a second chamber, the first chamber is in fluid communication with the first oil outlet, the second chamber is in fluid communication with the second oil outlet; the piston mechanism comprises a first piston and a second piston, the first piston is received in the first chamber, the second piston is received in the second chamber, the first seal is sleeved on the first piston, the second seal is sleeved on the second piston, the first piston and the second piston define a first compensation hole and a second compensation hole, respectively, the fluid supplement port is configured to be in fluid communication with the first chamber through the first compensation hole, and the handbrake oil inlet is configured to be in fluid communication with the second chamber through the second compensation hole.

11. The brake system for all-terrain vehicle according to claim 9, wherein the fluid supplement port is in fluid communication with the first chamber through the first compensation hole, and the handbrake oil inlet is in fluid communication with the second chamber through the second compensation hole, when the elastic mechanism is in an initial state; the first compensation hole and the second compensation hole are blocked by the first seal and the second seal, respectively, when the elastic mechanism is in a compressed state, thereby allowing pressure to be built in each of the first chamber and the second chamber; the elastic mechanism comprises a first elastic component and a second elastic component, the first elastic component is arranged between the first piston and the second piston, the second elastic component is arranged between the second piston and the pump body, a deformation direction of the first elastic component is the same as a deformation direction of the second elastic component, and an elastic coefficient of the first elastic component is greater than an elastic coefficient of the second elastic component.

12. The brake system for all-terrain vehicle according to claim 11, wherein he connecting rod mechanism is configured to drive the first piston to move in a preset direction under the function of the brake pedal, the first compensation hole is configured to be blocked by the first seal when the first piston moves, thereby allowing pressure to be built in the first chamber, and the oil in the first chamber to flow through the first oil outlet to the rear-wheel brake assembly; the first elastic component is configured to push the second piston to move in the preset direction when the first piston moves, and the second compensation hole is configured to be blocked by the second seal, thereby allowing pressure to be built in the second chamber, and the oil in the second chamber to flow through the second oil outlet to the front-wheel brake assembly; the pressure built in the first chamber is a first pressure, and the pressure built in the second chamber is equal to the first pressure when the connecting rod mechanism drives the first piston to move; the handbrake oil inlet is configured to further build pressure in the second chamber through a gap between the second seal and the second piston when the handbrake pump generates pressure after a function of the connecting rod mechanism, thereby increasing the pressure in the second chamber to a second pressure, and the second pressure is greater than the first pressure.

13. The brake system for all-terrain vehicle according to claim 11, wherein the handbrake oil inlet is configured to receive the oil from the handbrake pump when the handbrake pump generates pressure, thereby causing the oil to enter the second chamber through the second compensation hole to build pressure in the second chamber, and further causing the oil in the second chamber to flow through the second oil outlet to the front-wheel brake assembly; when the handbrake pump generates pressure, the oil in the second chamber is configured to flow through the second oil outlet to the front-wheel brake assembly; the connecting rod mechanism is configured to drive the first piston to move in the preset direction under the function of the brake pedal; the first compensation hole is configured to be blocked by the first seal when the connecting rod mechanism drives the first piston to move in the preset direction after a function of the handbrake pump, thereby allowing pressure to be built in the first chamber, and the oil in the first chamber to flow through the first oil outlet to the rear-wheel brake assembly.

14. The brake system for all-terrain vehicle according to claim 11, wherein the first piston defines a first fluid storage chamber in fluid communication with the first compensation hole, the first fluid storage chamber comprises an opening in fluid communication with to the first chamber, a direction of the opening of the first fluid storage chamber faces the second piston, and at least a portion of the first elastic component is received in the first fluid storage chamber; the second piston defines a second fluid storage chamber in fluid communication with the second compensation hole, the second fluid storage chamber comprises an opening in fluid communication with the second chamber, a direction of the opening of the second fluid storage chamber is the same as the direction of the opening of the first fluid storage chamber, and at least a portion of the second elastic component is disposed in the second fluid storage chamber.

15. The brake system for all-terrain vehicle according to claim 9, wherein a sidewall of the second piston defines a limiting hole, a limiting component is provided in the limiting hole and fixed to the pump body, the limiting component is configured to limit a maximum moving distance of the piston mechanism; the limiting hole extends through the second piston along a radial direction of the second piston, the limiting hole is a waist-shaped hole, and a waist length of the waist-shaped hole is equal to the maximum moving distance of the piston mechanism.
